# EUROPEAN PATENT APPLICATION

(11) **EP 4 074 588 A1**
(43) Date of publication of application: **19.10.2022**
(21) Application number: 21168577.1
(22) Date of filing: 15.04.2021
(51) Int. Cl.: B62M 6/60, B62K 7/04, B62K 5/06, B62K 5/10, B62M 9/02, B62M 6/50, B62J 45/411, B62K 15/00

(54) **A UTILITY VEHICLE**

(71) Applicant: Laplandar ApS, 2930 Klampenborg (DK)
(72) Inventor: Kirsebom, Jochum, Trygve, Harald, 2930 Klampenborg (DK); Pedersen, Glenn, 7100 Vejle (DK); Dzafic, Adis, 3700 Rønne (DK)
(74) Representative: Inspicos P/S

(57) **Abstract**

A utility vehicle (1) comprising a rear section (2) and a front section (3) arranged in front of the rear section in a lengthwise direction, the front section forming a seat (5), a single front wheel rotatable about a wheel axis (8), and a steering handle (7) operatively connected to the front wheel, the rear section forming at least two rear wheels (13, 14), a powered drive (16), and a utility bed (15). To enable good performance and simple and reliable transfer of torque from the powered drive and/or a manual drive, the vehicle comprises a power transmission connecting the powered drive to each of the at least two rear wheels, the vehicle further comprising a crank structure for manual driving and connected to each of the at least two rear wheels via a manual transmission, wherein the manual transmission is connected to the rear wheels via a common intermediate drive shaft which is also arranged to be driven by the powered drive.

## Description

### INTRODUCTION

The disclosure relates to a utility vehicle and a method of using the vehicle.

### BACKGROUND

utility vehicles exist, e.g. in the form of tricycles with a battery-operated support motor are becoming increasingly popular. Tricycles exist in which the motor is supported by manual input e.g. via pedals as known from traditional bikes.

The transmission can become complex and expensive.

### SUMMARY

To improve existing utility vehicles, a utility vehicle is provided with a rear section and a front section. The rear and front sections define a lengthwise direction in which the front section is in front of the rear section. The front section forms a seat, at least one front wheel, and a steering handle operatively connected to the front wheel, the rear section forms at least two rear wheels, a powered drive, and a utility bed forming a platform for carrying items.

The vehicle further comprises a power transmission connecting the powered drive to each of the at least two rear wheels. A crank structure is provided for manual driving e.g. via pedals of the kind known from bicycles. The crank structure is functionally connected to transfer torque to each of the at least two rear wheels via a manual transmission.

The manual transmission is connected to the rear wheels via a common intermediate drive shaft which is also arranged to be driven by the powered drive.

This allows the powered input and the manual input to be joined on the common intermediate drive shaft which makes a combined connection to the rear wheels. This simplifies the construction and may save space and costs.

The crank structure may comprise a crank arm attached for rotating a crank shaft about a crank axis and it may comprise pedals.

The manual transmission may comprise a chain wheel arranged on the common intermediate drive shaft and configured to freewheel relative to the common intermediate drive shaft in one rotational direction and to drive the common intermediate drive shaft in the opposite rotational direction. This allows freewheeling without rotation of the crank.

The manual transmission may comprise a first intermediate chain wheel arranged on a hub and connected by a first chain to a crank chain wheel of the crank structure. The manual transmission may further comprise a second intermediate chain wheel arranged on the hub and connected by a second chain to the chain wheel arranged on the common intermediate drive shaft. In this way, the manual transmission is split into two sections with individual chains, and the manual transmission is de-coupled efficiently from the powered drive. When reference herein is made to a chain or chain wheel, it may likewise be understood as a belt such as a tooth belt and a belt wheel.

The manual transmission may be configured to operate the powered drive between an activated state and a non-activated state. The user may therefore only consider operating the manual transmission, e.g. by using pedals. When using the pedals, the powered drive is activated, and when stopping using the pedals, the powered drive is de-activated. This provides a very easy user interface and increases safety since the user will only need to consider whether to use the manual transmission.

In a use situation, the user may ride the vehicle like a normal bike. When the user rotates the pedals actively, the motor is started and provides additional power. When sufficient speed is achieved or when the user wants to stop, the active rotation of the pedals may be stopped, and that will automatically deactivate the motor.

The operation of the powered drive between an activated state and a non-activated state may be controlled by a switch which is operated by the first chain. Since this chain is connected directly to the crank chain, this allows a fast reaction on manual input via crank structure.

The powered drive may comprise an electric motor forming a stator and a rotor rotatable relative to the stator. In this embodiment, the common intermediate drive shaft may be constituted by the rotor or it may extend through the rotor such that the common intermediate drive shaft becomes located within, and extending through the electric motor. This allows the chain wheel arranged on the common intermediate drive shaft to become located very close to the motor and provides a compact design.

The power transmission may comprise:
- a first belt pulley wheel connected to a first drive shaft via a first coupling, and
- a second belt pulley wheel connected to a second drive shaft via a second coupling;
wherein the first drive shaft is connected to a first of the at least two rear wheels, the second drive shaft is connected to a second of the at least two rear wheels.

The utility vehicle may particularly form a tricycle with a manual drive input e.g. via pedals.

The utility bed serves as a means for cargo transport.

The front section may form a seat comparable to the seat of a bicycle, i.e. attached to form a continuation of a post extending upright from a crank shaft. The front wheel may be rotatable about a wheel axis, e.g. formed by a hub of the kind known from front wheels of bikes. The front wheel may further include a brake, and it may be connected to the steering handle e.g. via a dampened suspension structure, e.g. gas dampened.

The utility vehicle may comprise a power transmission connecting the powered drive to each of the at least two rear wheels. The power transmission may comprise a first belt pulley wheel connected to a first drive shaft via a first coupling, and a second belt pulley wheel connected to a second drive shaft via a second coupling. The first drive shaft may be connected to a first of the at least two rear wheels, the second drive shaft is connected to a second of the at least two rear wheels. In that way, the rear wheels are separated all the way to the belt pulleys which may be driven by the motor. This provides an ability to independently rotate each wheel and optimizes the ability to swing the vehicle through sharp turns. Particularly, the first and second coupling may provide freewheeling meaning that the coupling transfers torque only in one direction. This allow the vehicle to freewheel without transferring torque to the motor.

The system may act like an open differential with up to 100% torque transfer to highest path of resistance, i.e. to the wheel with most tire fiction. Typical open differential transfers tongue to the path of least resistance, i.e. to the wheel with least amount of traction.

In an alternative embodiment, the couplings may not be freewheeling, or they are selectable between a freewheeling and a non-freewheeling configuration. When not freewheeling, the motor can be used for braking the vehicle and thereby safe wear on the brakes of the vehicle. Additionally, the motor may generate power in a breaking operation and thereby optimize the power consumption.

### LIST OF DRAWINGS

In the following, embodiments of the disclosure will be described in further details with reference to the drawing in which:
Fig. 1 illustrates a utility vehicle;
Figs. 2-3 illustrate the vehicle in a partly disassembled state;
Figs. 4-5 illustrate the bearing structure connecting the front and rear sections;
Fig. 6 illustrates the location of the rotation axis relative to the wheel axis;
Fig. 7 illustrates details of a combined power transmission and manual transmission;
Figs 8-10 illustrates details of the combined power transmission and features of the manual transmission;
Fig. 11 illustrates a damper structure between the front and rear sections;
Fig. 12 illustrates a forklift feature of the utility bed; and
Fig. 13 illustrates a utility vehicle with a container placed on the utility bed.

### DESCRIPTION OF EMBODIMENTS

Referring to the drawings, the utility vehicle is exemplified by a tricycle 1 with manual and electrical drive. An alternative would be a purely electrically driven vehicle or a purely manually driven vehicle.

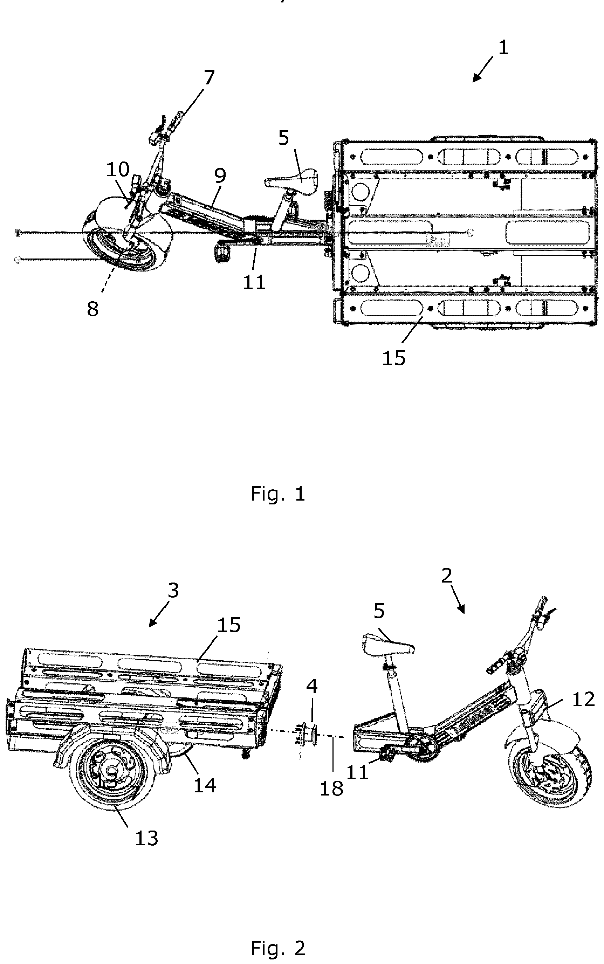

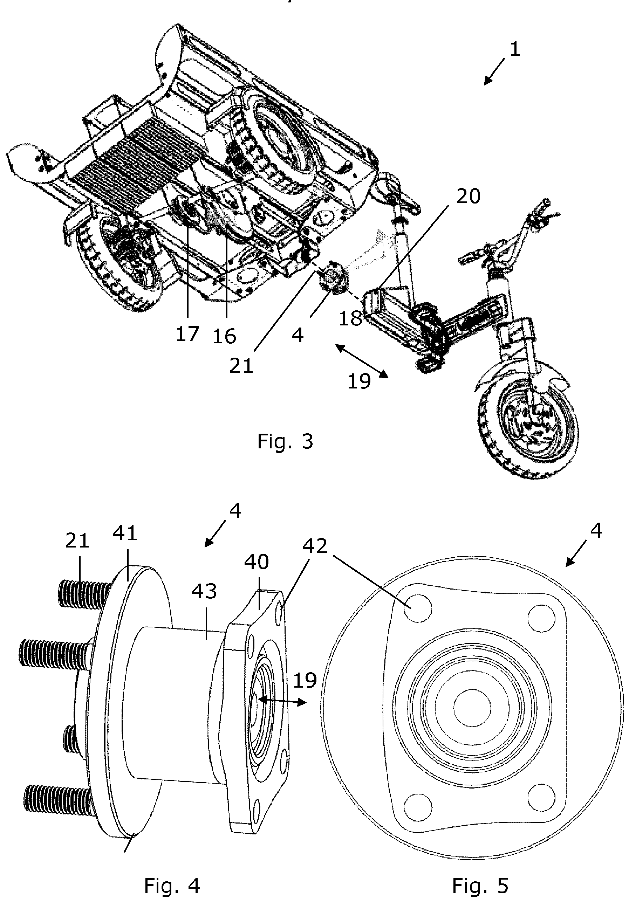

Figs. 1-3 illustrate the vehicle 1. In Fig. 1, the vehicle is assembled. Fig. 2 illustrates the vehicles in three parts being a rear section 2, front section 3, and a bearing structure 4. Fig. 3 illustrates the vehicle seen from below.

The bearing structure 4 connects the front and rear sections in a lengthwise direction. The bearing structure is made as a single entity which is detachable from the rear section and from the front section. It is a closed unit forming a combined radial and axial suspension, and it is sealed to provide suitable weather protection independent on the front and rear sections.

The front section comprises a seat 5 e.g. in the form of a regular bicycle saddle.

A single front wheel 6 is controlled by the steering handle 7, functionally in the same way as a regular bicycle.

The front wheel is rotatable about a wheel axis illustrated by the dotted line 8.

The front section may comprise a battery, e.g. housed in the frame section illustrated by numeral 9. However, the battery may also be located in the rear section near the motor and operatively connected to the motor in the rear section and controlled by control handles 10 on the steering handle 7.

The peddle and crank structure 11 forms a manual drive input coupled by a chain or belt linkage (not illustrated) to the rear section.

The front wheel is suspended in the front fork 12.

The rear section comprises two rear wheels 13, 14. and a utility bed 15 for carrying cargo load. A motor 16 (c.f. Fig. 3) provides powered drive to the rear wheels via the transmission 17.

The bearing structure 4 allows rotation around the rotation axis illustrated by dotted line 18 and facilitates transfer of axially directed forces between the front and rear section as indicated by the arrow 19

The combined radial and axial bearing is releasably attached to the front section by fastening means. In the illustrated embodiments, the combined radial and axial bearing is releasably attached by use of fastening means, e.g. including bolts (not shown) entering into the front bolt holes 20 and to the rear section by fastening means 21 entering into rear bolt holes (not shown) in the rear section. Fastening means may include bolts or rivets etc.

Fig. 4 illustrates an enlarged view of the bearing structure. The bearing structure is configured with a front-end plate 40 and a rear-end plate 41. The front-end plate is formed with bearing front bolt holes 42 for receiving fixing bolts when enter front bolt holes 20 in the front section. The rear-end plate is provided with either external treaded studs or internal threads 21. The front-end plate 40 and the rear-end plate 41 are joined by the bearing section 43 forming in one combined unit both a radial and an axial bearing. This bearing section is sealed and therefore protected independent of the front section and the rear section of the vehicle.

The bearing structure is configured to carry the entire load in the connection between the front section and the rear section and thereby forms a load path between the sections. Due to the bolted assembly, the bearing structure is releasable from both sections and the vehicle can therefore be taken apart efficiently and the bearing structure can be replaced if needed.

Fig. 5 illustrates the bearing when seen from the front-end plate i.e. looking in the axial direction.

The bearing structure is permanently sealed and combines the radial and axial forces in one pre-lubricated unit which dust and water tight and therefore requires no maintenance. Since maintenance is not possible, the risk of maintenance errors which could potentially lead to dangerous binding or locking is reduced.

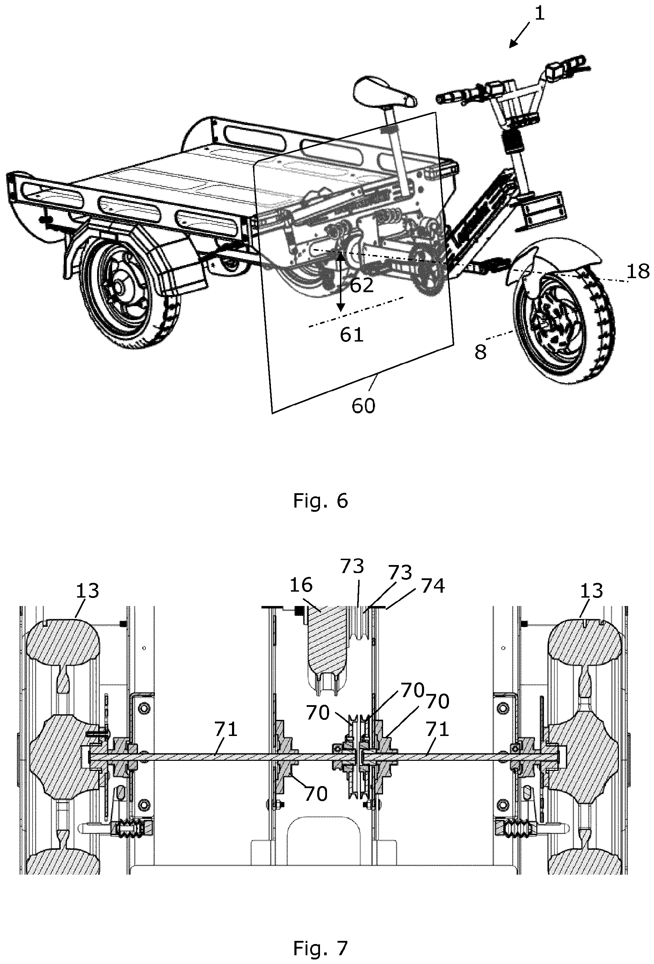

Fig. 6 illustrates a vertical plane 60. The plane is perpendicular to the rotation axis. If the wheel axis is projected onto the illustrated vertical plane, it will be located below the rotation axis of the bearing structure. I.e. the rotation axis is located above the wheel axis. The projection of the wheel axis 8 onto the plane is illustrated by the dotted line 61. The distance between the wheel axis projection 61 and the rotation axis 18 is indicated by arrow 62. This distance 62 could e.g. be anywhere between 0 and 30 percent of the distance between the rotation axis 18 and the seat, e.g. less than 25 percent, or less than 5 percent. This provides a particularly good balance when tilting the front section relative to the rear section during turning of the vehicle.

The utility vehicle may comprise said manual drive input, particularly a crank structure 11 with pedals connected to a crankshaft by crank arms. In this embodiment, the crank shaft may be rotatable about a crank axis. The crank axis may intersect the rotation axis, or the distance between the crank axis and the rotation axis, when the crank axis is projected onto the plane 60, may be smaller than the length of the crank arms connecting the pedals to the crankshaft.

The crank axis may be perpendicular to the rotation axis.

The crank may operate a chain extending to the powered drive in the rear section. Fig. 7 illustrates the drive system which combines powered drive and manual drive input.

Figs. 7-8 illustrate a combined manual transmission and power transmission. Each rear wheel 13, 14 is connected to a belt pulley wheel 70 via a drive shaft 71. The identical numbering indicates identical or at least functionally identical components of the right-side wheel and the left-side wheel. The belt pulley wheels 70 are driven by the electric motor 16 via the drive pulley wheels 73 and belts (not illustrated) extending between the belt pulley wheels and the drive pulley wheels. The belt pulley wheels are rotated by the pulley axel 74. The belt pulley wheels 70 are freewheeling relative to the drive shafts 70 such that they only drive the shafts in one rotational direction.

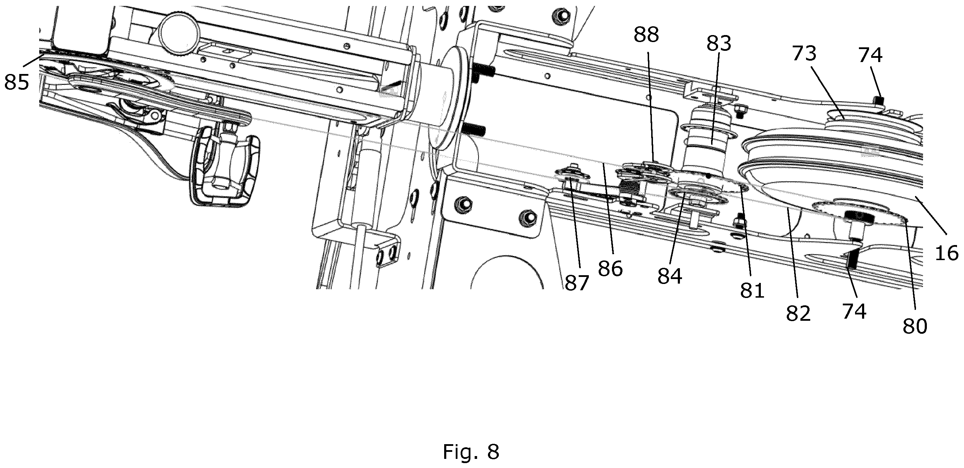

In manual mode, the drive pulley wheels 73 are driven by the chain wheel 80 attached to the pulley axel 74, c.f. Fig. 8. The chain wheel 80 is connected to a first intermediate chain wheel 81 by a first chain 82. The first intermediate chain wheel 81 rotates on the hub 83, and the hub 83 is of the kind known from rear wheels of bikes. The first intermediate chain wheel 81 can freewheel, i.e. it drives the hub only upon rotation in one direction, and the electric motor is therefore free to drive the vehicle without rotating the pedals and the vehicle can freewheel, e.g. downhill without rotating the pedals.

The pulley axel 74 is driven both by the chain wheel 80 and by the motor 16 and thereby forms common intermediate drive shaft joining torque from the pedals with torque from the motor.

The first intermediate chain wheel 81 is connected to and drives on the hub 83 with the second intermediate chain wheel 84. The second intermediate chain wheel 84 is connected to the crank chain wheel 85 of the crank structure 11 by a second chain 86.

Optionally, the drive pulley wheels 73 or the belt pulley wheels 70 are attached to freewheel, and the pedals may be free to drive the vehicle without rotating the electric motor.

The combined manual transmission and power transmission solution illustrated in Figs. 7-8, provides a compact and very efficient means of allowing the driven axle wheels to spin with different velocity, while providing mechanical traction control aid on slippery surfaces.

Fig. 8 further illustrates an electronic switch 87 arranged between the second intermediate chain wheel 84 and the crank chain wheel 85. The second chain further drives via a chain tension wheel 88.

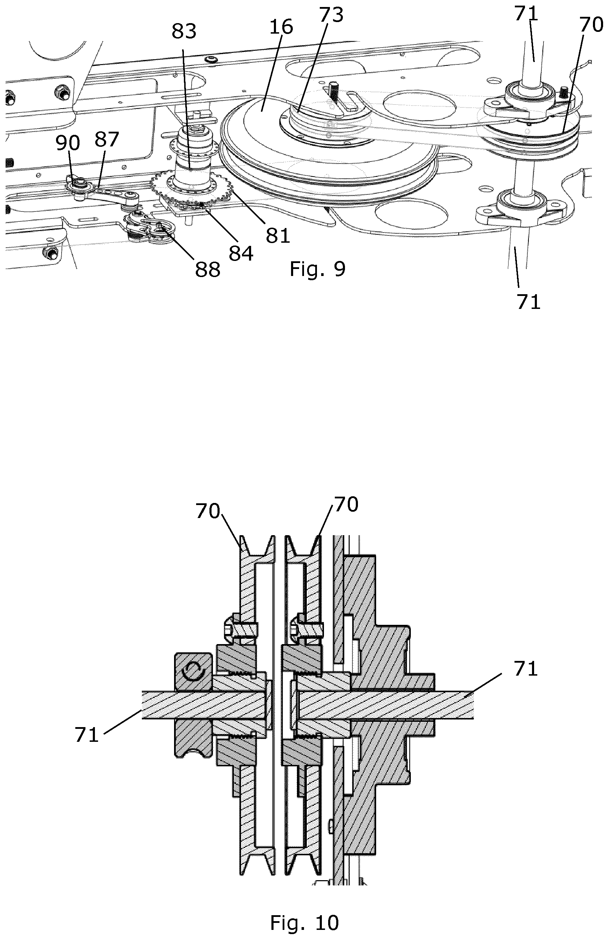

Fig. 9 illustrates further details of the electronic switch 87 and tensioner 88. The electronic switch is a torque sensor and comprises a switch wheel 90. When the chain is stretched in response to drive input via the pedals, the electronic switch is activated, and the electric motor is started. The chain thereby operates the powered drive. The electric motor provides support power for driving the vehicle such that the drive force is partly from the manual drive and partly from the powered drive. In alternative implementations, the torque sensor may vary the motor torque based on the registered tension in the chain.

Fig. 10 illustrates further details of the transmission structure connecting the powered drive and the manual drive to one or each of the at least two rear wheels.

The first drive shaft is connected to a first of the at least two rear wheels, the second drive shaft is connected to a second of the at least two rear wheels, and both the first coupling and the second coupling allow freewheeling in one rotational direction and direct transmission in the opposite rotational direction.

Fig. 10 illustrates that the shafts 71 are not connected. This allows each shaft and the corresponding wheel to rotate individually, independent on the other shafts and wheel. This supports sharp turns in which an out wheel may rotate at a higher speed than an inner wheel.

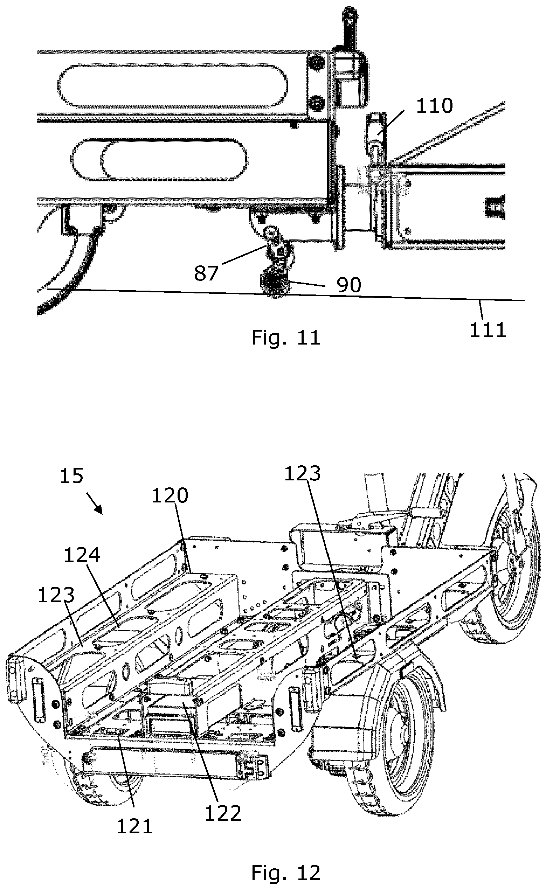

Fig. 11 illustrates a damper structure 110 acting on the bearing structure to dampen movement of the front section relative to the rear section about the rotation axis. The damper has no spring effect and thereby provides a pure dampening effect and not spring effect. The illustrated damper 110 is an oil damper with a piston movable in a cylinder by displacement of oil. The drawing illustrates only one damper. Two dampers may, however, have a positive effect on the dampening and provide a safety feature with continued dampening even if one damper fails. Fig. 11 also illustrates the engagement between the chain or belt 111 and the switch wheel 90.

Fig. 12 illustrates details of the utility bed 15. The utility bed is designed to carry cargo for transportation, and it forms a load platform 120 for carrying items in one level over ground. A recessed forklift utility portion 121 is at a lower level than the platform and forms elongated tracks. The forklift utility portion allows access for a forklift to enter below items carried by the platform. The elongated tracks are parallelly disposed and extend in the lengthwise direction to allow loading or emptying of the utility bed from behind the vehicle. The tracks could also be sideways arranged.

The load platform forms an intermediate section 122 between two outer sections 123. The intermediate and outer sections are separated by the forklift utility portion. The electric motor 16, the pulley wheels 73, the chain wheel 80, the intermediate chain wheels 81, 84 and the first chain 82 are located in the compartment formed underneath the intermediate section and the intermediate section and the sidewalls extending between the intermediate section 122 and the forklift utility portion 121 thereby protect the drive structure.

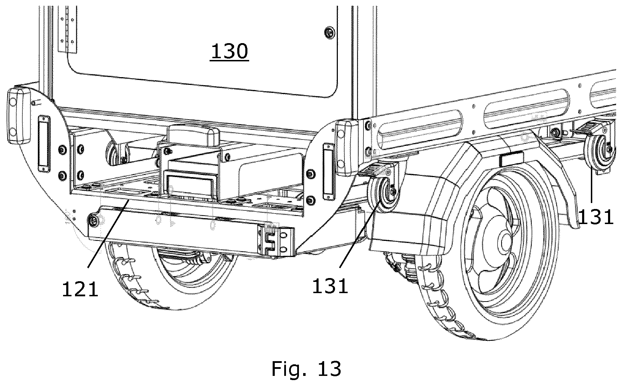

The utility bed, and particularly the outer sections 123 of the load platform 120 may comprise cavities, e.g. in the form of through holes 124. These are explained further relative to Fig. 13 and provides spacing for wheels of containers to be transported on the utility bed 15.

Fig. 13 illustrates the vehicle with a container 130 loaded on the load platform and clearly illustrates the spacing for a forklift provided by the recessed forklift utility portion 121. The container wheels 131 are fixed on the container and used for rolling the container when it is not loaded onto the utility bed 15. The through holes 124 in the outer sections 123 of the load platform 120 allow the wheels 131 to extend through the outer section and thus the container to rest with its lower surface on the utility bed.

## Claims

1. A utility vehicle (1) comprising a rear section (2) and a front section (3) arranged in front of the rear section in a lengthwise direction, the front section forming a seat (5), at least one front wheel rotatable about a wheel axis (8), and a steering handle (7) operatively connected to the front wheel, the rear section forming at least two rear wheels (13, 14), a powered drive (16), and a utility bed (15) forming a platform for carrying items, the vehicle further comprising a power transmission connecting the powered drive to each of the at least two rear wheels, the vehicle further comprising a crank structure for manual driving and connected to each of the at least two rear wheels via a manual transmission, wherein the manual transmission is connected to the rear wheels via a common intermediate drive shaft which is also arranged to be driven by the powered drive.

2. The vehicle according to claim 1, wherein the manual transmission comprises a chain wheel (80) arranged on the common intermediate drive shaft and configured to freewheel relative to the common intermediate drive shaft in one rotational direction and to drive the common intermediate drive shaft in the opposite rotational direction.

3. The vehicle according to claim 2, wherein the manual transmission comprises a first intermediate chain wheel (81) arranged on a hub (83) and connected by a first chain to a crank chain wheel (85) of the crank structure, the manual transmission further comprising a second intermediate chain wheel (84) arranged on the hub (83) and connected by a second chain to the chain wheel (80).

4. The utility vehicle according to claim 3, wherein the manual transmission operates the powered drive between an activated state and a non-activated state via a switch which is operated by the first chain.

5. The vehicle according to any of the preceding claims, wherein the powered drive comprises an electric motor forming a stator and a rotor, and wherein the common intermediate drive shaft is constituted by the rotor or extends through the rotor.

6. The vehicle according to any of the preceding claims, wherein the power transmission comprises:
- a first belt pulley wheel connected to a first drive shaft via a first coupling, and
- a second belt pulley wheel connected to a second drive shaft via a second coupling;
wherein the first drive shaft is connected to a first of the at least two rear wheels, the second drive shaft is connected to a second of the at least two rear wheels.
